(19) Europäisches Patentamt
European Patent Office
Office européen des brevets

(11) EP 0 721 734 A1

(12) EUROPEAN PATENT APPLICATION
published in accordance with Art. 158(3) EPC

(43) Date of publication:
**17.07.1996 Bulletin 1996/29**

(21) Application number: **94927822.0**

(22) Date of filing: **30.09.1994**

(51) Int. Cl.[6]: **A01N 25/08**, A01N 25/12

(86) International application number:
**PCT/JP94/01637**

(87) International publication number:
**WO 95/09532 (13.04.1995 Gazette 1995/16)**

(84) Designated Contracting States:
**FR NL**

(30) Priority: **01.10.1993 JP 269882/93**

(71) Applicant: **NIPPON SODA CO., LTD.**
**Chiyoda-ku, Tokyo 100 (JP)**

(72) Inventors:
- **ASAI, Makoto,**
  **Nippon Soda Co., Ltd.**
  **Haibara-gun Shizuoka 421-04 (JP)**
- **TANAKA, Nobuyuki,**
  **Nippon Soda Co., Ltd.**
  **Takaoka-shi, Toyama 933 (JP)**
- **NISHIMURA, Kaoru,**
  **Nippon Soda Co., Ltd.**
  **Haibara-gun Shizuoka 421-04 (JP)**

(74) Representative: **de Bruijn, Leendert C. et al**
**Nederlandsch Octrooibureau**
**Scheveningseweg 82**
**2517 KZ Den Haag (NL)**

# (54) PESTICIDE COMPOSITION

(57) A sustained-release pesticide composition containing an active pesticidal ingredient, a hydrophobic substance having a melting point of 50 °C or above, and an oil-absorbent substance. The composition contains as active pesticidal ingredient having a particularly high water-solubility, can readily be shaped, and enables the sustained-releasability of the active ingredient to be freely controlled.



Printed by Rank Xerox (UK) Business Services
2.13.0/3.4

## Description

### Technical Field:

This invention relates to a sustained release pesticide composition for treatment onto soils and a process for the composition.

### Background of Invention:

In order to control harmful or pathogenic both insects and microorganisms live in fields or paddy fields, pesticides are used suitable way for their formulations. Dusts or granules containing effective components for them are directly spraying onto soils; wettable powders or emulsiable concentrate are diluted with water to spray; granulas are mixed with soils to put into planting holes when crops are planting or implanting.

At present, herbicides for the paddy field or insecticides for the planting field of the field are extruded granules containing a pesticide active ingredient and a mineral filler is mixed by using both a binder and water to knead. As such glances are disintegrated quickly, the pesticide active ingredient released from the granule and transferred into water or soils. Accordingly, there is a problem that the pesticide active ingredient level can not be maintained at effective dose when the active ingredient is highly water soluble.

Furthermore, the solved component is absorbed by crops in short time, such crops sometimes have phytotoxicity.

In addition, there is a danger that the effect of the component for the crops are not even because the transfer distance or distribution of the component released from each granule in the treated soils are different since they are effected by rainfalls or species of soils.

To solve such problems, pesticides having sustained release formulations are developing.

For example, the Japanese laid-open patent applications, SHOU55-4,356, HEI2-288,803, and HEI4-66,509 disclose a process that a certain pesticide active ingredient is made hydrophobic by using waxes. The Japanese laid-open patent applications SHOU59-164,705 and SHOU61-282,301 disclose that a certain pesticide active ingredient is released sustainingly by using acrylic polymers as a ingredient of the pesticide.

When acrylic polymers are employed, the polymer should have balanced hydrophobic and hydrophilic properties to control the release of the pesticide active ingredient from the granule. However, there is a restriction for inert ingredient which can use for the pesticides, that is exception of EPA. Accordingly, it is impossible to choose polymers based on their physical properties, particularly, water solubility.

Furthermore, the pesticides disclosed in the Japanese laid open applications HEI2-288,803 and HEI4-66509 contain the blocked pesticide active ingredient by waxes. In such type pesticides, the blocked pesticide active ingredient should be broken for making granules by extrusion. In addition, when the blocked pesticide active ingredient is reused because the final product does not have desirable performance or out of order, such the pesticide should be broken. However, the active ingredient is uncovered in the broken pesticide, and it makes the release control of the active ingredient from the pesticide granule.

Therefore such the pesticide can not reuse, and they must be discarded to spend resources.

Other process disclosed in the Japanese laid-open application SHOU55-4356 that the pesticide is produced by mixing the pesticide active ingredient, the wax, and inorganic carrier to make slurry. However, in this process, since the pesticide is solidified by using the spray mist method or liquid solidify method, the production cost of the pesticide is high, and the productivity is low.

### Disclosure of Invention:

The inventors of the present invention studied to solve the problem described above and completed particular form composition which contain an effective dose for harmful insects, pathogenic microorganisms and weed of a pesticide active ingredient, a hydrophobic substance has melting point higher than 50°C and a substance which has the oil absorb ability.

In the composition, the releasing speed of the pesticide active ingredient can be controlled optionally with no relation to the water solubility of the ingredient. Accordingly, the concentration of the composition is maintained a certain level with little affection from water contents of the soil, and the effect of the composition is even in the area in which the composition was distributed.

The feature of the present invention is a sustained release pesticide composition which comprises pesticide active ingredient, a hydrophobic substance has melting point higher than 50 °C and a substance which has the oil-absorb ability.

Another feature of the present invention is a sustain release pesticide composition formed by the method that the hydrophobic substance for soil distribution is molten and mixed with other ingredients to form particles heating over the melting point of the hydrophobic substances.

The pesticide active composition is not limited, however, it preferably has more than 60 ppm in water solubility. When the water solubility is less than 60 ppm, the distributed pesticide active ingredient does not transfer in soil even if it had a lot of rain; therefore there is no necessity to control release of the pesticide active ingredient from the pesticide.

As the example of the pesticides which can be employed in the present invention, the following compounds are raised.

(a) a group of the compounds described in both formulae (1) and (2),

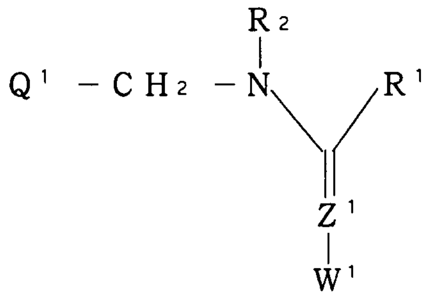

• • • (1)

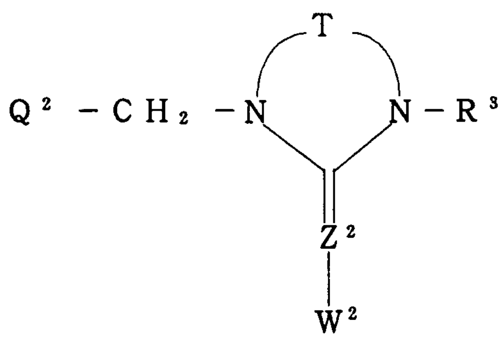

• • • (2)

(wherein; R [1] is a substitute selected from a group which comprises a lower alkyl group such as $CH_3$, $C_2H_5$, an alkylamino group such as $NHCH_3$, $NHC_2H_5$ , a dialkylamino group such as $N(CH_3)_2$, an alkoxy group such as $OCH_3$, $OC_2H_5$, an alkylthio group $SCH_3$, $SC_2H_5$ ; $Z^1$ and $Z^2$ are CH or N respectively; $W^1$ and $W^2$ are substitutes selected from an electron attractive group such as $NO_2$ and CN respectively; $R^2$ and $R^3$ are substitutes selected from a group containing H, a lower alkyl group such as methyl group and ethyl group, P(=O)(OR')$_2$, CH(OR''), and CH=NOR''' respectively;wherein R' ,R'' and R''' are substitutes selected from a group comprising H and a lower alkyl group such as methyl group and ethyl group, $Q^1$ and $Q^2$ are substitutes selected from a group comprising nitrogen containing heterocyclic group such as a pyridyl group and thiazoryl group which may be substituted by a halogen atom such as Cl, Br and F respectively; T is a substitute selected from a group comprising $-CH_2CH_2-$, $-CH_2N(R^4)CH_2-$;wherein $R^4$ is a hydrogen or the lower alkyl group described above.)

Examples of such compounds raised are: 2-methylamino-2-[N-methyl-(2-chloro-5-pyridyl)methylamino]- nitroethylene (water solubility: > 2,300 ppm), 2-methylamino-2-[N-ethyl-(2-chloro-5-pyridyl) methylamino]-nitoroethylene(water solubility: up to 600 g/l), $N^1$-methyl-$N^2$-(2-chloro-5-pyridyl)methyl-$N^3$-nitroguanidine(water solubility: up to 730 ppm), $N^1$-[(2-chloro-5-pyridyl)methyl]-$N^2$-cyano-$N^1$-methylacetamidine(water solubility: 3,700 ppm) which is referred to as "active substance-1" herein below, 1-(2-chloro-5-pyridylmethyl)-2-nitroimino-3,5-dimethylhexahydrotriazine, 1-(2-chloro-5-thiazoylmethyl)-2-nitroimino-3,5-dimethylhexahydrotriazine(Imidachlorprid, water solubility: 650 ppm). As other active ingredient containing insecticides, Nitenpyram(water solubility: 300 g/l), Ethiophencalb(water solubility: 1,900 ppm), Carbofran(water solubility: 700 ppm), Aldicarb(water solubility: 6,000 ppm), Acephate(water solubility: ca. 650 g/l) are raised.

The above mentioned active ingredient may be used themselves alone or mixed more than two dependent on the species of harmful insects for crops. Also their mixing ratio is selected optionally.

The active ingredient can be selected from fungicides or herbicides which permeate into their targets.

As examples of the systemic fungicides transfer by permeation are:

| Fungicides | water solubility |
|---|---|
| Penconasole | 70 ppm |
| Triadimenol | 62 ppm |
| Phosethyl-Alminium | 120 g/l |
| Ethaconasole | 80 ppm |

As examples of the herbicides are:

| herbicides | water solubility |
|---|---|
| Alachlor | 240 ppm |
| Metolachlor | 530 ppm |
| Cyanazine | 171 ppm |

The hydrophobic substances having the melting point higher than 50°C employed in the present invention contain various kinds of those derived from natural sources or artificially made from petroleum, and not limited. As examples derived from the natural sources are waxes such as carnauba wax, shellac, beeswax, Japan wax, ricewax, and candelira wax. As examples derived from semi-natural sources, which are fatty acids obtained by decomposing some kinds of plant oil or animal oil or hydrogenation thereof are such as stearic acid, behenic acid, rapeseed oil hardened fatty acid, palm oil hardened fatty acid, and Tallow hardened fatty acid. As the examples derived from the artificial sources are waxes such as paraffin wax and microcrystalline wax.

The above mentioned waxes may use alone or in combination. The percentage of the hydrophobic substances described above is not limited, but preferably more than 15 weight %, because of the mixture needs good extrusion characteristics. In several cases, it is necessary to change the percentage of them to control water solubility, released amount or release ratio of the pesticide active ingredient in optionally.

In general, when the water solubility of the pesticide active ingredient becomes more, the release ratio more speedy; when the highly crystallized substances are used, the formed particles become harder and the release ratio slower.

As examples for the substances having oil absorbing ability, starch, starch derivatives, cellulose, amorphous silicon dioxide produced by a dry or wet method.

The substance having oil absorb ability is defined as the nature in which the small amount of the substance should be added to make a molten wax like microcrystallyne wax powder at looking. The amount of the substance having oil absorb ability for making the microcryatalline wax 1 g powders is as follows: more than 0.7 g of the amorphous silicon dioxide, more than 3.0 g of the starch or cellulose, more than 6. 0 g of inorganic substances such as clays or talcs. The ratio of the substance having oil absorb ability is preferably higher than 15 weight % because of the extrusion properties of their mixture. Accordingly, the substance having oil absorbability less than 4 g is preferable, and the starch, starch derivatives, the cellulose, and amorphous silicone dioxide. Particularly, the amorphous silicon dioxide is preferable, and it is referred to as White carbon. The examples of commercially available White carbons are Carplex #67, #80, CS-5, CS-7, and so forth.

Briefly, the pesticide composition of the present invention is produced by mixing the pesticide active ingredient and the hydrophobic substance having the melting point higher than 50 °C to heat them higher than the melting point to extrude them through the screen having the 0.5-2 mm mesh size. However, when only two ingredients, the pesticide active ingredient and the hydrophobic one are mixed, the mixture can not be formulate by the extrusion method, because the mixture is liquid. When addition of any carrier which is not solve in the hydrophobic substance into the mixture make to formulate the mixture possible by enhancing the mixture's viscosity.

However, in the extrusion process, the addition of the carrier does not solve the problems occurred in the formulation of the pesticid e. Because, since the addition of the carrier into the mixture makes the temperature at the extrusion change, and this change of the temperature causes the hardness of the clay-like mixture unstable to give instable productivity. When the extrusion temperature for formulation becomes high, the extruded pesticide forms millet jelly to flow

down, and the certain form of the pesticide are not produced. On the other hand, the extrusion is performed at the temperature close to the melting point of the hydrophobic substance, the surfaces of the formulated pesticides become rough to loose their value as merchandises.

However, when the pesticide active ingredient, the hydrophobic substance having the melting point higher than 50°C, and the substance having oil absorbability are mixed to heat to melt them, the hardness of the clay-like mixture is not effected by changing the temperature at the extrusion. Accordingly, the productivity of the pesticide is very stable. Particularly, when the amorphous silicon dioxide is employed as the substance having oil absorbability, stable productivity of the pesticide are given. Because, since the amorphous silicone include void spaces filled with the air in the heated mixture, the air prevent heat transfer into whole mixture to make the temperature change of the mixture small.

The addition volume of the substance having oil absorb ability is not limited, however, it is necessary to add the volume to obtain the separated extruded granules respectively. Furthermore, if necessary, any filler is added into the mixture inorganic substances such as clays, talc, and calcium carbonate. Preferable is calcium carbonate because of its oil absorbability.

Furthermore, water-soluble inorganic or organic substances, or water-soluble polymers may be added for regulating the release speed of the pesticide active ingredient from the pesticide. In order to enhance the releasing speed, the addition volume of a substance having large water solubility may be increased; in opposite, in order to slow the releasing speed, the addition volume of that may be decreased. As examples of the water soluble substances, inorganic substances such as sodium sulfate and sodium chloride, organic substances such as citric acid, adipic acid and salts thereof, urea, $\alpha$-starch, and lactose are raised.

As examples of the water soluble polymer, arginic acid, sodium arginate, xanthan gum, carrageenan, karaya gum, hydroxypropylcellulose, derivatives of cellulose such as hydroxypropylmethylcellulose and hydroxypropylstarch are raised.

As examples of synthetic polymers, polyvinyl alcohol, carboxyvinyl polymer and sodium polyacrylate are raised.

The percentage of each ingredient employed in the present invention are not limited, because it is different what combination is chosen. However, in general, the percentage of them to total weight are; the pesticide active ingredient 0.01 - 50 weight %, preferably 0.01 - 20 weight %; the substance having the melting temperature higher than 50 °C 15 - 80 weight %, preferably 18 - 70 weight %; the substance having oil absorb ability 0.05 - 30 weight %, preferably 0.5 - 20 weight %; the water soluble substance for controlling the releasing speed 0 - 5- weight %, preferably 0.01 - 40 weight %; the carrier is added at the percentage reached to total 100 % when the above-mentioned ingredients are added with.

The production process of the pesticide composition of the present invention is not limited, however, in general, the extrusion method is employed. Briefly, the pesticide active ingredient, the hydrophobic substance and the substance having the oil absorb ability is mixed, if necessary, releasing speed control agent and/or carrier is mixed, and the mixture is kneaded at the higher temperature of the melting point oh the substance having the oil absorb ability to obtain the clay-like mixture; then, the mixture is extruded through the screen having the mesh size 0.5 - 2 mm to make particles.

The production process of the present invention is energy saving method compared with the prior water kneading method, because the production process of the present invention does not need to dry the extruded products. Furthermore, when the product which do not fill the spec. by passing through the filter is melted again to reproduce the pesticide and make particles as described again, the obtained pesticide have enough release control ability, and the yield of they reaches about 100 %. These are great advantages of the present invention.

The pesticide composition of the present invention is used for dusting directly both soil and water surface of paddy fields, planting holes in fields. The pesticide composition may be used by mixing with the soil for plants, or nursery boxes.

The pesticide composition of the present invention can control the releasing speed of the pesticide active ingredient very well, and residual effect is retained. Furthermore, the pesticide produced by the present invention, which contain the pesticide acitve ingredient can cause phytotoxicity, has no phytotoxicity, when it is used to treat crops just after it rained.

Best Mode for Carrying Out the Invention:

(EXAMPLE 1)

Twenty grams of active substance-1 which has 0.3% of solubility in water, 620 grams of precipitated calcium carbonate which works as a filler, 20 grams of polyvinyl alcohol which works as a active ingredient release control agent from a pesticide(gosenol GH-17, NIHON GOSEI KAGAKU), and 40 grams of White carbon which has oil absorb ability(Carplex #80, SHIONOGI) were homogenized; then 300 grams of molten paraffin wax which has 155 F was the melting point wasadded into the mixture by using a kneader which could maintain the mixture at 85 °C. The mixture was extruded through the screen having 1 mm mesh size and maintaining at 85°C, to get extrusion products. The products had rod form and not stack each other; after extrusion, the products were broken by using a crusher followed by sieving from 0.8 to 2 mm size to sale.

(EXAMPLE 2)

The good extrusion products were obtained as the same composition as EXAMPLE 1 except the both temperature was 95 °C

(EXAMPLE 3)

Twenty grams of active substance-1, 670 grams of precipitated calcium carbonate, 20 grams of polyvinyl alcohol which works as a active ingredient release control agent from a pesticide(gosenol GH-17, NIHON GOSEI KAGAKU), and 50 grams of White carbon were homogenized; then 240 grams of molten carnauba wax was added into the mixture by using a kneader which could maintain the mixture at 85°C. The mixture was then extruded through the screen having 1 mm mesh size and maintaining at 85 °C to get extrusion products. The products had rod form and not stack each other; after the extrusion, the products were broken by using a masher followed by sieving from 0.8 to 2 mm size to sale.

(EXAMPLE 4)

The good extrusion products were obtained as the same composition as EXAMPLE 3 except the both temperature was 95 °C

(EXAMPLE 5)

Twenty grams of active substance-1, 715 grams of precipitated calcium carbonate which works as a filler, and 45 grams of White carbon were homogenized; then molten mixture of 60 grams of paraffin wax and 160 grams of carnauba wax was added into the homogenized mixture by using the kneader which maintains the mixture at 85 °C. The mixture was extruded through the screen having 1 mm mesh size and maintaining at 85 °C, to get extrusion products. The products had rod form and not stack each other; after extrusion, the products were broken by using a masher followed by sieving from 0.8 to 2 mm size to sale.

(EXAMPLE 6)

Twenty grams of active substance-1, 695 grams of precipitated calcium carbonate which works as a filler, 20 grams of polyvinyl alcohol which works as a active ingredient release control agent from a pesticide, and 45 grams of White carbon which has oil absorb ability were homogenized; then 240 grams of the molten carnauba wax was added into the mixture by using a kneader which could maintain the mixture at 85°C. The mixture was extruded through the screen having 1 mm mesh size and maintaining at 85 °C, to get extrusion products. The products had rod form and not stack each other; after extrusion, the products were brokenby using a masher followed by sieving from 0.8 to 2 mm size to sale.

(EXAMPLE 7)

The good extrusion products were obtained as the same composition as EXAMPLE 6 except the both temperature was 95 °C

(EXAMPLE 8)

Twenty grams of active substance-1, 615 grams of precipitated calcium carbonate which works as a carrier, 100 grams of polyvinyl alcohol which works as a active ingredient release control agent from a pesticide, and 45 grams of White carbon which has oil absorb ability were homogenized; then 160 grams of molten paraffin wax was added into the mixture by using a kneader which could maintain the mixture at 85°C. The mixture was extruded through the screen having 1 mm mesh size and maintaining at 85°C, to get extrusion products. The products had rod form and not stack each other; after extrusion, the products were broken by using a masher followed by sieving from 0.8 to 2 mm size to sale.

(EXAMPLE 9)

Twenty grams of active substance-1, 605 grams of precipitated calcium carbonate which works as a carrier, 20 grams of urea which works as a active ingredient release control agent from a pesticide, and 35 grams of White carbon which has oil absorb ability were homogenized; then 240 grams of molten carnauba wax was added into the mixture by using a kneader which could maintain the mixture at 85°C. The mixture was extruded through the screen having 1 mm

mesh size and maintaining at 85°C, to get extrusion products. The products had rod form and not stack each other; after extrusion, the products were broken by using a masher followed by sieving from 0.8 to 2 mm size to sale.

(EXAMPLE 10)

The good extrusion products were obtained as the same composition as EXAMPLE 9 except the both temperature was 95 °C

(COMPARATIVE EXAMPLE 1)

Twenty grams of active substance-1, 660 grams of precipitated calcium carbonate, 20 grams of polyvinyl alcohol were homogenized; then 300 grams of molten paraffin wax was added into the mixture by using a kneader which could maintain the mixture at 85 °C. The mixture was extruded through the screen having 1 mm mesh size and maintaining at 85 °C, to get extrusion products. The products stick each other without giving any rod form.

(COMPARATIVE EXAMPLE 2)

Twenty grams of active substance-1, 660 grams of precipitated calcium carbonate which works as a carrier, 100 grams of urea were homogenized; then 240 grams of molten carnauba wax was added into the mixture by using a kneader which could maintain the mixture at 85°C. The mixture was extruded through the screen having 1 mm mesh size and maintaining at 85 °C to get extrusion products. The products stick each other without giving any rod form.

(COMPARATIVE EXAMPLE 3)

Twenty grams of active substance-1, 480 grams of talcs, 485 grams of clays, 10 grams of sodium carboxymethyl cellulose (Celogen BSH-12, Daiichi Kougyou K.K.), and 5 grams of sodium dioctylsulfosuccinate(N K-EP-70G, Takemoto Yushi Co.) were kneaded by using a kneader which could maintain the mixture at 85°C with adding 120 grams of water. The mixture was extruded through the screen having 1 mm mesh size at room temperature, to get extrusion products. The products are not stack each other after extrusion. After drying, the products were broken by using a crusher followed by sieving from 0.8 to 2 mm size to sale.

The results about extrudability of examples 1-10 and comparative examples 1 and 2 are summerized in Table 1.

Table 1.

| | | Examples -1 | -2 | -3 | -4 | -5 | -6 | -7 | -8 | -9 | -10 | Comparative Examples -1 | -2 |
|---|---|---|---|---|---|---|---|---|---|---|---|---|---|
| Composition | Active Ingredient-1 | 20 | ← | ← | ← | ← | ← | ← | ← | ← | ← | ← | ← |
| | Precipitated Calcium Carbonate | 620 | ← | 670 | ← | 715 | 695 | ← | 615 | 605 | ← | 660 | 640 |
| | Polyvinyl alchohol | 20 | ← | ← | ← | 0 | 20 | ← | 100 | | | 20 | |
| | Urea | | | | | | | | | 100 | ← | | 100 |
| | White Carbon | 40 | ← | 50 | ← | 45 | ← | ← | ← | 35 | ← | 0 | ← |
| | Paraffin Wax | 300 | ← | | | 60 | ← | ← | ← | | | 300 | |
| | Carnauba Wax | | | 240 | ← | 160 | ← | ← | ← | 240 | ← | | 240 |
| Extrudability | Extrusion Temperature 85°C | good | | good | | good | good | | good | good | | bad | bad |
| | 95°C | | good | | good | | | good | | | good | | |

(TEST EXAMPLES)

The releasing ratios of active ingredient from the pesticide granules, phytotoxicity, and pest control ratios are mesurured and the results are summerized in Table 2.

Tabale 2.

| | | Examples -5 | Examples -6 | Examples -8 | | Comparative Example-3 |
|---|---|---|---|---|---|---|
| Composition | Active Ingredient -1 | 20 | ← | ← | Active Ingredient -1 | 20 |
| | Calcium Carbonate | 715 | 695 | 615 | Talc | 480 |
| | White Carbon | 45 | ← | ← | Clay | 485 |
| | Paraffin Wax | 60 | ← | ← | CMC-Na | 10 |
| | Carnaba Wax | 160 | ← | ← | | |
| | Polyvinyl Alcohol | 0 | 20 | 100 | Na Dioctylsulfosuccinate | 5 |
| Releasing Ratio into Soils (%) | 0 time | 0 | 0 | 0 | | 0 |
| | After 4hrs | 1 | 1 | 14 | | 26 |
| | After 24hrs | 2 | 3 | 25 | | 51 |
| | After 48hrs | 5 | 9 | 42 | | 62 |
| Phytotoxicity | Application to Cavedge Planting Hole | - | - | ± | | + |
| Residual Effect: Evaluation Ratio of Insect Control(%) (upper column) Diamond back (under column) Aphid | After 15 days | 100 | 100 | 91 | | 81 |
| | | 100 | 100 | 100 | | 98 |
| | After 22 days | 100 | 100 | 88 | | 83 |
| | | 100 | 100 | 100 | | 99 |
| | After 29 days | 82 | 86 | 60 | | 36 |
| | | 100 | 100 | 92 | | 85 |

[Determination method for releasing ratios of the active ingredient from the pesticide granules into soils]

Test granules 0.2 g are wrapped by using a gaze to embed into 3 cm depth from the surface of soils in a pot having 11 cm diameter. Then, water is supplied by using Rain Simulator for 1 hour with 30 mm/hr; the granules are taken out at the time 4 hr, 24 hr, and 48 hr after they are supplied water to dry for about 5 hr at 45 °C. The active ingredient is extracted from the dried granules to determine their contents by using HPLC.

The releasing ratio(%)=(1-the contents after water is supplied / the contents before water is supplied) x 100

[Study of the Phytotoxicity for Crops]

One g of granules of the pesticide as a test sample is placed in a planting hole digged in the field. A cabbage seedling which has five or six leaves is transplanted into the hole. Two weeks later, the chemical injury for the seedling is observed by naked eyes.

(Standard for the observed Phytotoxicity)

-: no Phytotoxicity
±: slight Phytotoxicity (can be used)
+: weak Phytotoxicity (can be used)
++: medium to strong Phytotoxicity (can not be used)
+++: the seedling death

[Study of the insect control ratio]

One g of the granules of the pesticide as a test sample is placed in a planting hole digged in the field. A cabbage seedling which has five or six leaves is transplanted into the hole. A certain days later, numbers of insects both diamond back and aphid found on the seedling in the treated area are counted to estimate the insect control ratio of the pesticide compared to the numbers of those found in the no treated area.

The insect control ratio=[1-(the number of the insects found in the treated area/those founf in the no treated area)] x 100

<u>Industrial Applicability</u>:

As decribed above, the pesticide of the present invention is produced by the convenient method and the release of pesticide active ingredient from the pesticide is freely controlled. Accordingly, the present invention is has wide application range.

## Claims

1. A pesticide composition comprises active ingredient, a hydrophobic substance having the melting point higher than 50 °C, and a substance having oil absorbability.

2. Said pesticide composition according to claim 1, wherein said hydrophobic substance having the melting point higher than 50°C is molten higher than its melting point when the pesticide composition granule is extruded.

3. Said pesticide composition according to claim 1, wherein said pesticide active ingredient has the water solubility more than 60 ppm.

4. Said pesticide composition according to claim 1, wherein said hydrophobic substance having the melting point higher than 50°C is at least one of selected from the group consisting of carnauba wax, shellac, beeswax, Japan wax, ricewax, and candelira wax, fatty acids obtained by decomposing some kinds of plant oil or animal oil or hydrogenation thereof, stearic acid, behenic acid, rapeseed oil hardened fatty acid, palm oil hardened fatty acid, and Tallow hardened fatty acid, paraffin wax and microcrystalline wax.

5. Said pesticide composition according to claim 1, wherein said substance having oil absorb ability is at least one of selected from amorphous silicon dioxide, starch and cellulose.

6. Said pesticide composition according to claim 1, wherein the content of said pesticide active ingredient is 0.01 to 50 weight %, that of said hydrophobic substance having the melting point higher than 50°C is 15 to 80 weight %, and that of said substance having oil absorbability is 0.05 to 30 weight %.

## INTERNATIONAL SEARCH REPORT

International application No. PCT/JP94/01637

A. CLASSIFICATION OF SUBJECT MATTER

Int. $Cl^6$ A01N25/08, A01N25/12

According to International Patent Classification (IPC) or to both national classification and IPC

B. FIELDS SEARCHED

Minimum documentation searched (classification system followed by classification symbols)

Int. $Cl^5$ A01N25/08, A01N25/12

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P, X | JP, A, 5-305226 (Takeda Chemical Industries, Ltd.), November 19, 1993 (19. 11. 93), (Family: none) | 1-6 |
| X | JP, B2, 55-18681 (Nippon Nogyo K.K.), May 21, 1980 (21. 05. 80), (Family: none) | 1-6 |
| X | JP, A, 59-78102 (Rohm and Haas Co.), May 4, 1984 (04. 05. 84) & EP, A, 106563 & AU, A, 8319504 & BR, A, 8304986 & CA, A, 1223172 | 1-6 |
| X | JP, A, 55-124701 (Nitto Electric Industry Co., Ltd.), September 26, 1980 (26. 09. 80), (Family: none) | 1, 3-6 |
| A | JP, A, 54-107525 (Kumiai Chemical Industry Co., Ltd.), August 23, 1979 (23. 08. 79), (Family: none) | 5 |
| A | JP, W, 1-500749 (Pharmon Chemicals Inc.), March 16, 1989 (16. 03. 89) | 5 |

[X] Further documents are listed in the continuation of Box C. [ ] See patent family annex.

* Special categories of cited documents:
- "A" document defining the general state of the art which is not considered to be of particular relevance
- "E" earlier document but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| December 9, 1994 (09. 12. 94) | December 27, 1994 (27. 12. 94) |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP94/01637

C (Continuation). DOCUMENTS CONSIDERED TO BE RELEVANT

| Category* | Citation of document, with indication, where appropriate, of the relevant passages | Relevant to claim No. |
|---|---|---|
| | & WO, A, 8704591 & AU, A, 8770216<br>& ZA, A, 8700771 & CN, A, 87101769<br>& US, A, 4775534 | |

Form PCT/ISA/210 (continuation of second sheet) (July 1992)